# EUROPEAN PATENT SPECIFICATION

(11) **EP 3 345 197 B1**
(45) Date of publication and mention of the grant of the patent: **02.06.2021**
(21) Application number: 15756653.0
(22) Date of filing: 31.08.2015
(51) Int. Cl.: H01B 13/24, H01B 7/282, H01B 9/02

(54) **POWER TRANSMISSION CABLE AND PROCESS FOR THE PRODUCTION OF POWER TRANSMISSION CABLE**
STROMÜBERTRAGUNGSKABEL UND VERFAHREN ZUR HERSTELLUNG DES STROMÜBERTRAGUNGSKABELS
CÂBLE DE TRANSMISSION D'ÉNERGIE ET PROCÉDÉ DE FABRICATION DE CÂBLE DE TRANSMISSION D'ÉNERGIE

(43) Date of publication of application: 11.07.2018
(73) Proprietor: NKT HV Cables AB, 371 60 Lyckeby (SE)
(72) Inventor: JOHANSSON, Tommy, S-372 63 Bräkne-Hoby (SE)
(74) Representative: Kransell & Wennborg KB
(86) International application number: PCT/EP2015/069819
(87) International publication number: WO 2017/036506

(56) References cited:
- WO-A1-99/33070
- GB-A- 722 312
- JP-A- 2004 139 848
- US-A- 4 145 567
- US-A- 4 256 921

## Description

### TECHNICAL FIELD

The present invention relates to a power transmission cable and to a process for the production of a power transmission cable as defined in the appended claims.

### BACKGROUND ART

High voltage electric power transmission cables are used to transmit electric power of medium or high voltage. Such electric cables may be buried into the ground and are called land cables, or the electric power cables may be buried into a sea bed or they may freely extend between two fixing points in sea water. Cables used in sea applications are called submarine, sea water or underwater power cables.

The length of power transmission cables is increasing since there is a need to interconnect different regional electrical transmission networks to allow global trading of energy. Areas, where energy is on the other hand needed and on the other hand produced, may also be remote from each other which further increase a need for safe power transfer.

Power transmission cables normally include a conductor and an insulation system comprising at least one semi-conductive layer and an insulation layer. In addition to these functional layers of the insulation system, a protection system is applied to protect the insulation system against e.g. moisture penetration, i.e. to block water from penetrating the insulation, and further to provide protection against mechanical wear or forces during production, installation, use, etc.. Thus, the protection system may comprise a moisture barrier and further protective layers.

The insulation system may comprise or consist of layers of paper-based material, which form a semi-conductive layer and an insulation layer of the insulation system. A semi-conductive layer in that case typically comprises paper comprising semi-conducting filler particles, such as carbon black, that renders the paper material semi-conductive.

An insulation system comprising paper layers is typically impregnated with a dielectric fluid, such as a low viscosity oil, to protect the insulation against moisture pick-up and to fill up all pores and voids or other interstices in the insulation system. After impregnation, the insulation system is usually directly provided with a moisture barrier to keep the oil inside the insulation system and to protect the insulation system from moisture and air from the outside environment. Usually, the moisture barrier is provided in the form of an extruded lead sheath. The extrusion is performed onto the cable directly after it is lifted from the impregnation oil. The process for the production of power transmission cables with paper-based insulation system is further described for example in "Submarine Power Cables: Design, Installation, Repair, Environmental Aspects", Thomas Worzyk, Springer-Verlag Berlin Heidelberg, 2009, ISBN 978-3-642-01269-3, pp 126-130.

JP2004-139848A shows a power transmission cable comprising a paper based insulation system.

There are also power cables having an insulation system comprising layers of extrudable polymeric material, such as olefin-based polymeric materials. These cables are not impregnated in a dielectric fluid, but still require a moisture barrier and other protective layers to protect the insulation system from moisture penetration and mechanical wear. WO2008071754 (A1) shows an example of a power transmission cable comprising an insulation system of extrudable polymeric material with a surrounding protective sheath that acts as a water barrier and which comprises lead.

Lead is commonly used as moisture barrier material and is easy to process. However, lead is not an environmentally friendly material and also, it is sensitive to mechanical fatigue and is not always an optimal material as a moisture barrier. While it is still desirable to use lead as a moisture barrier due to easy processing, it is also desirable to be able to use alternative materials as moisture barrier materials. However, other metals have been difficult to apply as moisture barriers due to the fact that the insulation systems are sensitive and should not be damaged during the application of moisture barriers.

### SUMMARY OF THE INVENTION

In view of the prior art, there is a need to provide for a possibility to use alternative and also more environmentally friendly moisture barriers than a lead sheath.

There is also a need to find alternative solutions that will allow for a wider choice of materials for the moisture barrier, as well as other methods of application of the moisture barrier to the cable.

The object of the present invention is thus to provide an alternative moisture barrier arrangement which enables the use of more environmentally friendly barrier materials and which provides excellent mechanical properties to the cable.

It is also an object of the present invention to provide a moisture barrier arrangement which is flexible and can be adapted for different needs.

It is a further object of the present invention to provide a moisture barrier arrangement which enables application of different kinds of moisture barriers while the insulation system is protected against forces acting from the outside.

It is still another object of the present invention to provide a cable which fulfils requirements relating to mechanical strain, and which is economical to produce.

The objects above are attained by a power transmission cable according to claim 1. Further developments of the invention are the subject of the dependent claims.

Especially, the objects are attained by a power transmission cable comprising a metal conductor, an electric insulation system surrounding the conductor coaxially and radially outwards of the conductor, and a protection system surrounding the insulation system coaxially and radially outwards of the insulation system. The insulation system comprises an inner semi-conducting layer surrounded radially outwards by an insulation layer, and the insulation layer is optionally surrounded radially outwards by an outer semi-conducting layer. The protection system comprises a moisture barrier arrangement surrounding the insulation system coaxially and radially outwards of the insulation system. The moisture barrier arrangement comprises an independently applicable first layer and an independently applicable second layer. The first layer is an extruded plastic material layer and arranged in direct contact with the insulation system. The second layer is a metallic material layer and arranged in contact with the first layer.

It has been found that the first layer that is an extruded plastic material layer in the moisture barrier arrangement provides an initial protection for the insulation system. Therefore, the second layer of metallic material can be applied to the cable at a later stage, whereby it will be possible to adapt the moisture barrier to different needs. Thus, a flexible cable design is provided. Further, while it is still possible to use lead as a layer in the moisture barrier arrangement, the present moisture barrier arrangement enables also the use of more environmentally friendly materials as a moisture barrier, since the metallic material layer as the second layer in the moisture barrier arrangement can be applied and attached e.g. by means of mechanical means. Also the mechanical properties of the cable can be improved, since it will be possible to use desired metallic layers as the second layer, such as copper, an alloy comprising copper, aluminium, an alloy comprising aluminium, lead and steel. For example it will be possible to use extruded or welded materials that are corrugated or non-corrugated, i.e. smooth, since the first plastic layer provides protection to the insulation system during application and attachment of the second layer of the moisture barrier arrangement. Since the second layer is a metallic material layer, permanent moisture protection can be provided.

The inner semi-conducting layer, the insulation layer and the optional outer semi-conducting layer of the insulation system in the power cable are paper-based. Such a cable comprising a conductor and the paper-based insulation system is impregnated with a dielectric fluid before applying the moisture barrier arrangement to surround the insulation system. Since the cable is impregnated with a dielectric fluid, such as oil, the extrudable plastic material in the first layer of the moisture barrier arrangement consists of a lipophobic polymer. In this way, the impregnation fluid does not enter the first layer in the moisture barrier arrangement.

According to the invention, the extrudable plastic material in the first layer of the moisture barrier arrangement is semi-conducting. In this way, the electrical properties of the cable are not negatively affected. Also, in case of a cable construction in which an outer semi-conducting layer is not required, such as in cables comprising a paper-based insulation system, the first layer of the moisture barrier arrangement may even improve the electrical properties of the cable.

The second layer of the moisture barrier arrangement may be an extruded or welded metallic layer that is corrugated or non-corrugated. By means of corrugation it is possible to improve the bending properties compared to a smooth (non-corrugated) metallic layer. Welded metallic layers can be adapted to specific cables and can be easily applied to surround the first layer of the moisture barrier arrangement at a later stage.

Since the second metallic layer can be applied for example by means of extrusion or welding onto the insulation system, the material for the second layer of the moisture barrier arrangement may be chosen from a variety of metals. Thus, the second layer of the moisture barrier arrangement can comprise or consist of a metallic layer of copper, an alloy comprising copper, aluminium, an alloy comprising aluminium, lead or steel.

The second layer of the moisture barrier arrangement may be an extruded lead sheath. Lead provides for excellent moisture barrier properties, while it is easy to process and while it makes the cable heavy which may be desirable for example in sea water applications.

The power transmission cable may be a high voltage direct current (DC) cable or a high voltage alternating current (AC) cable.

The objects above are also attained by a process according to claim 7 for the production of the cable as described above with a moisture barrier arrangement which comprises a first layer and a second layer, also referred to as an initial moisture barrier layer and a primary moisture barrier, respectively, comprising the steps of:
i) providing conductor for a power transmission cable and applying an insulation system to surround the conductor coaxially and radially outwards of the conductor;
ii) impregnating the cable from the step i), comprising the conductor and the insulation system, with a dielectric fluid;
iii) applying a first layer of a moisture barrier arrangement by extruding a layer of plastic material onto the insulation system, impregnated in the step ii);
iv) applying a metallic layer as a second layer of the moisture barrier arrangement onto the first layer of the moisture barrier arrangement.

During the process in the step iii) the extruded plastic material can be applied onto the cable provided from the step i) or ii) as a plastic tube with a diameter which exceeds the diameter of the cable. The extrusion of the plastic material is performed with a speed that is slower than the feeding speed of the cable, such that when the cable is provided with the extruded plastic tube, the tube will be elongated by the higher speed of the cable. This will cause the diameter of the plastic tube to decrease such that it will fit closely to and be in direct contact with the insulation system of the cable. Hence the fit will be optimal and the plastic material will not squeeze the cable in such a way that it will harm the insulation system.

The second layer of the moisture barrier arrangement can be applied during the step iv) by means of extruding, welding, gluing or by means of mechanical attachment means to the first layer of the moisture barrier arrangement. This will allow the use of other metallic materials than lead for the second layer, and also other means of application than extrusion. The mechanical properties of the cable will hence be improved.

The second layer of the moisture barrier arrangement can further be corrugated. This will further improve the mechanical and bending properties of the cable.

The present invention also relates to a process as defined above, in which the steps iii) and iv) are performed separately and independently of each other. This will allow for a choice of the primary moisture barrier at a later stage. Therefore, it will be possible to choose the material for the second, also referred to as primary or permanent layer of the moisture barrier arrangement, based on the intended use of the power transmission cable.

The process above is used on cables wherein the insulation system comprises or consists of a paper-based insulation system.

Further advantages and features of the invention are described below with reference to the appended drawings.

### BRIEF DESCRIPTION OF THE DRAWINGS

Fig. 1a is a partially cut side view of the layers of a cable comprising a paper-based insulation system for use with the present invention;
Fig. 1b is a radial cross section of the layers of a cable comprising a paper-based insulation system for use with the present invention;
Fig. 2a is a partially cut side view and a radial cross section (b) of the layers of a cable comprising an insulation system comprising extrudable polymer-based material not according to the present invention;
Fig. 2b is a radial cross section of the layers of a cable comprising an insulation system comprising extrudable polymer-based material not according to the present invention;
Fig. 3 is a radial cross section view of a HVAC cable comprising cables with an insulation system not according to the present invention;
Fig. 4 is a flow chart illustrating the steps of the process for the production of the cable according to the present invention.

### DETAILED DESCRIPTION

Power transmission cables generally comprise a metal conductor, an insulation system and a protection system comprising a moisture barrier arrangement. The moisture barrier arrangement according to the present invention comprises a first layer and a second layer. The first layer is herein also referred to as an initial moisture barrier layer, since it can be applied onto the insulation system of the cable first to provide an initial moisture protection until the structure and/or the material of the second layer of the moisture barrier arrangement has been decided and before the cable is buried into the ground or sea bed. The second layer of the moisture barrier arrangement is herein also referred to as a primary moisture barrier. The primary moisture barrier provides for permanent protection against water and/or moisture and can be applied onto the first layer of the moisture protection system at a later stage, e.g. just before the cable is buried into the ground or sea bed. The second layer may further be chosen from any suitable metallic material that will improve the mechanical properties of the cable, in addition of being the primary moisture barrier.

The first layer of the moisture barrier arrangement is an extruded plastic material layer and arranged in direct contact with the insulation system. By extrudable plastic is meant a material having a polymeric structure and being mouldable. Plastic materials may comprise or consist of organic and/or synthetic polymers. These materials are inert and comply with the insulation system of the cable. Any plastic material suitable for use in power transmission cables and suitable for extrusion could be used. The extrudable plastic material is an oil-resistant, lipophobic polymer, especially when used in cables comprising a paper-based insulation system. By lipophobic polymer is meant that the polymer is not soluble in lipids and/or does not have affinity for lipids. This is an advantage in connection with paper-based insulation systems which are impregnated in a dielectric fluid, such as oil, during the manufacture of the cable. The lipophobic material of the first layer in the moisture barrier arrangements prevents the oil from entering the first material layer and thus escaping from the insulation system. Examples of lipophobic polymers are polar polymers, such as polyamide, polyurethane and polyester. Further examples are halogenated polymers, such as polytetrafluoroethylene (Teflon®). The extrudable plastic material in the first layer of the moisture barrier arrangement fits tightly to the cable and therefore air will not be able to enter the cable insulation. Thus, the first layer of plastic material protects the insulation system and the conductor in an improved manner compared to e.g. an extruded lead sheath directly extruded on the insulation system and as used in prior art solutions.

The extrudable plastic material in the first layer of the moisture barrier arrangement can be a non-cross-linked polymer. In this way a softer material can be provided which conforms to the insulation system and to the second layer of the moisture barrier arrangement. Alternatively, the extrudable plastic material in the first layer of the moisture barrier arrangement can be cross-linked, whereby the mechanical properties of the material can be improved.

The extrudable plastic material in the first layer of the moisture barrier arrangement is semi-conducting so that it will not negatively affect the electrical properties of the cable. The plastic material may in this case comprise conductive filler particles. In case the insulation system comprises an insulation system and/or an outer semi-conducting layer of an extrudable polymer-based material, the chemical composition of the first layer in the moisture barrier arrangement is suitably different from the material of the outer semi-conducting layer. The second layer of the moisture barrier arrangement is a metallic material layer and arranged in contact with the first layer. The second layer may comprise or consist of metal. The metallic layer may comprise or consist of an extruded or welded metallic layer. The metallic layer may be corrugated or non-corrugated. The material for the metallic layer may be copper, an alloy comprising copper, aluminium, an alloy comprising aluminium, lead or steel.

According to one variant, the second layer of the moisture barrier arrangement is an extruded lead sheath. Lead has excellent moisture barrier properties and is typically used as a moisture barrier for power transmission cables.

The first layer of the moisture barrier arrangement allows for a late decision of a material for the second layer, i.e. the permanent moisture barrier of the cable. The second layer may be applied onto the first layer of the moisture barrier arrangement by means of extruding, gluing, welding or by means of mechanical attachment means. The first layer of the moisture barrier arrangement protects the insulation system against damages during the application of the second layer and therefore it is possible for example to use mechanical attachment means for securing the second layer of the moisture barrier arrangement to the first layer of the moisture barrier arrangement.

The use of corrugated metal as the second layer of the moisture barrier will render the power transmission cable of the invention flexible so that it is easily bendable. Corrugated metal will also improve the mechanical fatigue properties of the second layer of the moisture arrangement.

The first and second layers of the moisture barrier arrangement can be applied independently of each other to the cable. They could also be applied online during the cable manufacturing process. However, the first layer functioning as an initial moisture barrier provides for flexibility in the manufacturing process.

According to the present disclosure, the conductor is surrounded by an electric insulation system which comprises a first semi-conducting layer and insulation layer and optionally a second semi-conducting layer. The insulation system may comprise more than the inner and optionally the outer semi-conducting layers and there may be more than one insulation layers in the insulation system.

In the insulation system, the insulation layer or layers have insulation properties and essentially no conductivity or very low conductivity. The semi-conducting layer or layers can be rendered semi-conducting by using for example fillers having conducting properties. The filler may for instance be carbon black.

By insulation layer is meant a layer of a material that resists electricity. The conductivity of the insulation material may be for example of from about 1*10⁻⁸ to about 1*10⁻¹⁰ S/m at 20 °C, typically from 1*10⁻⁹ to 1*10⁻¹⁶ , depending of the magnitude of the electric field.

By semi-conducting layer is meant a layer of a material that has an electrical conductivity that is lower than that of a conductor but that is not an insulator. The conductivity of the semi-conducting material may be typically of larger than 10⁻⁵ S/m at 20 °C, such as up to about 10 or 10² S/m. Typically, the conductivity is less than 10³ S/m at 20 °C.

By conductivity is meant the property of transmitting electricity. The conductivity of a conducting material is more than about 10³ S/m at 20 °C. For example, carbon black has a conductivity of about 1000 S/m. Basically there is no upper limit, but in practical solutions the upper limit is about 10⁸ S/m at 20 °C.

The power transmission cable may be an underwater power cable or the power transmission cable may be a land cable. The cable is preferably a power transmission cable having a rated voltage of 50 kV or higher, and is thus suitable for use as a high voltage transmission power cable. Power transmission cables comprising the insulation system coaxially and radially surrounding the conductor can be of various kinds, for example of a type single phase electric power cable or three phase electric power cable. For example, the cables may be high voltage direct current (HVDC) cables, high voltage alternating current (HVAC) cables, extra high voltage cables (EHV), medium-voltage cables and low-voltage cables.

Single phase electric power transmission cables comprise a conductor, which is usually mainly constituted by a metal such as copper or aluminium. The conductor may be solid or stranded. Normally, the conductor has a generally circular cross section, even though alternative shapes might be conceived. The surrounding electric insulation layer may have a cross-section with an outer peripheral shape corresponding to the outer peripheral shape of the conductor, normally a generally circular outer periphery. The conductor may be directly or indirectly surrounded by the insulation system, i.e. the electric power transmission cable may comprise at least one material layer between the conductor and the insulation layer, e.g. a conductive tape.

The electric insulation system is mainly constituted of a paper-based material. The moisture arrangement of the present invention is used in cables having a paper-based insulation system.

The paper-based insulation material is based on cellulosic fibres. Cellulose has very good electrical properties and is a good insulator. The paper usually has a grammage of from about 60-190g/m², but is not limited to this specific range. The insulation paper may be manufactured for example from unbleached kraft pulp. The insulation paper, which is normally provided in the form of paper tapes, is applied to the cable by means of paper lapping lines comprising a row of lapping heads. The insulation paper is then wrapped around the cable while the tension of the paper is continuously controlled. The semi-conducting paper comprises filler particles of for example carbon black and is applied to the cable in a similar manner. Paper absorbs humidity from the surrounding air and if the water content of the paper during the manufacture is high, e.g. between 6-12%, the cable needs to be dried before impregnation.

A cable comprising a paper-based insulation system is usually impregnated with a dielectric fluid, such as a low viscosity oil, to protect the insulation against moisture pick-up and fill up all pores and voids or other interstices in the insulation system. It is important that there is substantially no air or water present in the insulation system. The impregnation is performed by feeding the cable including the conductor and the surrounding paper-based insulation system into a vessel containing the dielectric fluid. The cable is thereafter provided with a moisture barrier to keep the dielectric fluid inside the insulation system, and to protect the insulation system from water but also from air. The material of the first layer of the moisture barrier arrangement is therefore preferably in addition to being water resistant, also oil-resistant and air-resistant. By "resistant" is meant that the material provides for a barrier against e.g. water, oil or air, but which is not necessarily completely impermeable to e.g. water, oil or air.

The insulation system is according to the present invention enclosed by a protection system comprising the moisture barrier arrangement. The moisture barrier arrangement provides a water barrier for the cable and prevents intrusion of water into the electric insulation. Water barriers are required since the inherent properties of the electric insulation are such that the insulation may deteriorate and loose its insulation effect if the insulation is subjected to water for a longer period.

The conductor, the insulation layer and the moisture barrier arrangement can be surrounded by further material or layers of material that can be included in the protection system of the cable. Further materials and layers may have different tasks such as that of holding the different cable parts together, giving the power transmission cable mechanical strength and protecting the cable against physical as well as chemical attacks, e.g. corrosion. Such materials and layers are commonly known to the person skilled in the art. For example, such further materials may include armouring, for example steel wires.

As mentioned above, the power transmission cables according to the present invention can also be for example of a type three-phase electric power cable. Such cables comprise three conductors, each of which is surrounded by a separate electric insulation system. Each electric insulation system can be in turn radially surrounded by a respective protective system or there may be a common protective system for all conductors surrounded by an insulation system. The three phase electric power cable may also comprise further material and layers arranged around and enclosing the rest of the cable as described above. Such further material and layers may have different tasks such as that of holding the different cable parts, as described above, together, and giving the cable mechanical strength and protection, against physical as well as chemical attack, e.g. corrosion, and are commonly known to the person skilled in the art.

The power transmission cables according to the invention may be underwater power cables or the cables may be land cables, which both require a water barrier.

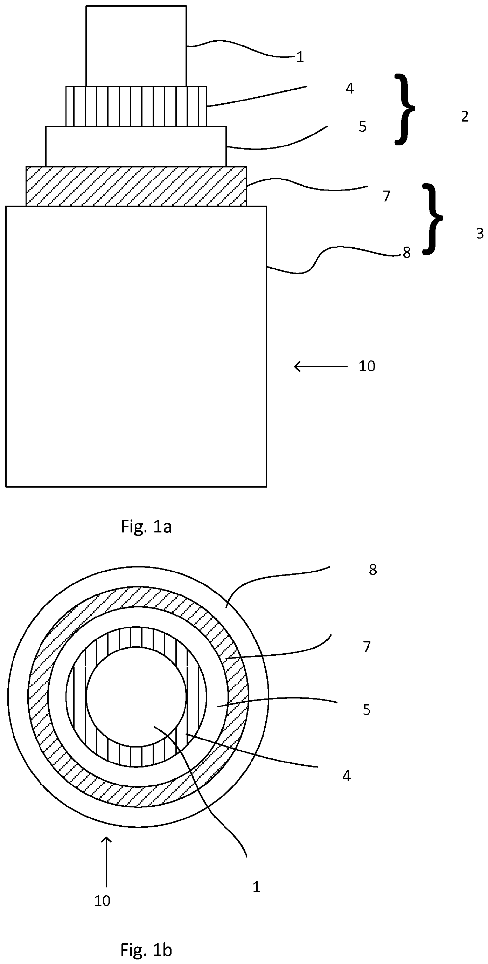

Fig. 1a and Fig. 1b show an example of a power transmission cable according an embodiment of the present invention. In Fig. 1a, the power transmission cable 10 is shown in a partially cut side view and in Fig. 1b in a radial cross-section and reference is made equally to both figures. The power transmission cable comprises a metal conductor 1, which may be a solid or stranded metal conductor of conductive metal, such as aluminium or copper. The cable 10 further comprises an insulation system 2 (indicated in Fig. 1a) comprising an inner semi-conducting layer 4, which surrounds the conductor 1 coaxially and radially outwards of the conductor 1. The inner semi-conducting layer 4 may be in direct contact with the conductor 1, or a layer of for example conductive tape (not shown) may be arranged in between the conductor 1 and the inner semi-conducting layer 4. The inner semi-conducting layer 4 is paper-based and comprises carbon black as filler to render the paper-based material semi-conducting. The inner semi-conducting layer 4 is surrounded coaxially and radially outwards by an insulation layer 5. The insulation layer 5 is also paper-based. Both the inner semi-conducting layer 4 and the insulation layer 5, when paper-based, are provided in the form of a paper tape and are helically wrapped around the conductor 1 by means of rows of lapping heads (not shown). The cable 10 further comprises a protection system comprising a moisture barrier arrangement 3. The moisture barrier arrangement 3 comprises a first layer 7, which comprises or consists of an extrudable polymer-based material, and a second layer 8, which can be a welded metal layer and which can be corrugated or smooth.

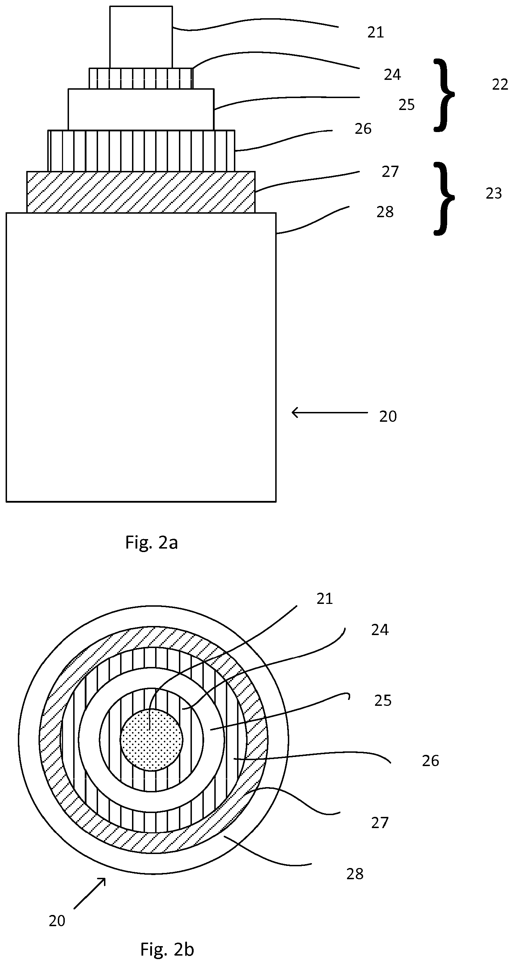

Fig. 2a and Fig. 2b show an example of a power transmission cable 20 not according to the present invention. In Fig. 2a, the power transmission cable 20 is shown in a partially cut side view and in Fig. 2b in a radial cross-section and reference is made equally to both figures. The power transmission cable 20 comprises a metal conductor 21, which may be a solid or stranded metal conductor of conductive metal, such as aluminium or copper. The cable 20 further comprises an insulation system 22 (indicated in Fig. 2a) comprising and inner semi-conducting layer 24, which surrounds the conductor 21 coaxially and radially outwards of the conductor 21. The inner semi-conducting layer 24 may be in direct contact with the conductor 21, or a layer of for example conductive tape may be arranged in between the conductor 21 and the inner semi-conducting layer 24 (not shown). The inner semi-conducting layer 24 comprises an extrudable polymer-based material and conductive filler particles, such as polyethylene-based polymer and carbon black to render the semi-conductive properties of the layer. The inner semi-conducting layer 24 is surrounded coaxially and radially outwards by an insulation layer 25. The insulation layer 25 comprises also an extrudable polymer-based material, and may be based on the same polymeric material as the semi-conducting layer 24, except that the material is insulating. The insulation layer 25 is in turn surrounded coaxially and radially outwards by an outer semi-conducting layer 26. The layers in the insulation system 22 are extruded onto the conductor, suitably in an on-line process. After extrusion, the insulation system is cured and forwarded to a process in which a protection system is applied onto the cable. Thus, the cable 20 further comprises a protection system comprising a moisture barrier arrangement 23. The moisture barrier arrangement 23 comprises a first layer 27, which comprises or consists of an extrudable polymer-based material, and a second layer 28. The second layer material can be a welded metal layer which can be corrugated or smooth. Further layers to provide mechanical protection for the cable may be added.

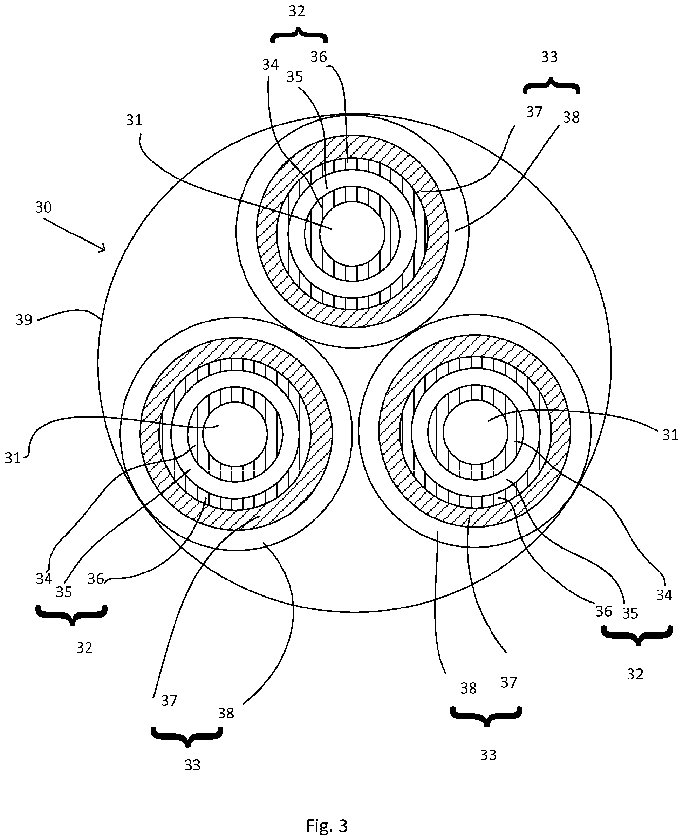

In Fig. 3 shows an example of an alternating current (AC) electric power transmission cable 30 comprising three conductors 31, wherein each conductor 31 is surrounded coaxially and radially by an insulation system 32 comprising layers of extrudable polymer-based material. The insulation system 32 comprises an inner semi-conducting layer 34, an insulation layer 35 and an outer semi-conducting layer 36. The insulation system 32 is in turn surrounded coaxially and radially outwards by a protection system comprising a moisture barrier arrangement 33. The moisture barrier arrangement 33 comprises a first layer 37, which comprises or consists of an extrudable polymer-based material, and a second layer 38, which is a metal layer that can be corrugated or smooth. The three conductors 31 are surrounded by an outer shield 39 that keeps the three conductors 31 together within the AC cable 30.

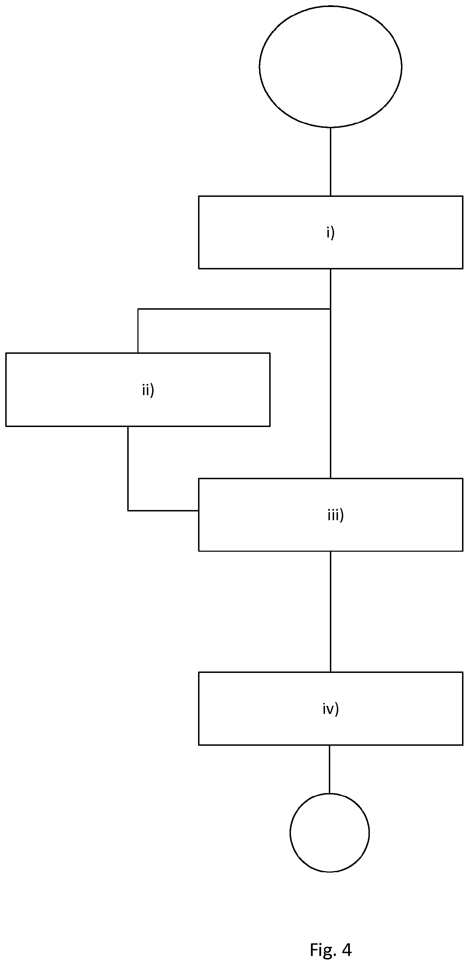

In Fig. 4, the process according to the present invention is illustrated in a flow chart. The process comprises the steps of:
i) providing a conductor 1; 21; 31 for a power transmission cable 10; 20; 30 and applying an insulation system 2; 22; 32 to surround the conductor 1; 21; 31 coaxially and radially outwards of the conductor 1; 21; 31;
ii) impregnating the cable from the step i), comprising the conductor 1; 21; 31 and the insulation system 2; 22; 32, with a dielectric fluid;
iii) applying a first layer of a moisture barrier arrangement 3; 23; 33 by extruding a layer of plastic material 7; 27; 37 onto the insulation system 2; 22; 32, impregnated in the step ii);
iv) applying a metallic layer 8; 28; 38 as a second layer of the moisture barrier arrangement 3; 23; 33 onto the first layer 7; 27; 37 of the moisture barrier arrangement 3; 23; 33.

In the step iii) in the process above, the extruded plastic material is applied onto the insulation system of the cable provided from the step i) or ii) as a plastic tube with a diameter which exceeds the diameter of the cable. The extrusion of the plastic material is performed with a speed that is slower than the feeding speed of the cable comprising the conductor and the insulation system and provided from the step i) and/or ii). When the cable is then provided with the extruded plastic tube, the tube is elongated by the higher speed of the cable, causing the diameter of the plastic tube to decrease such that it will fit closely to and in direct contact with the insulation system of the cable. By using this method in step iii) the first layer will fit tightly to the insulation system of the cable without squeezing the insulation system, which could potentially harm the insulation system. Also, since the first layer will fit tightly to the insulation layer, no air will be able enter to the insulation system/conductor.

In the step iv) of the process described above, the second layer of the moisture barrier arrangement may be applied by means of extruding, welding, gluing or by means of mechanical attachment means to the first layer of the moisture barrier arrangement. These methods of applying a moisture barrier to a power transmission cable may be inappropriate when applied directly to the insulation system, as they may harm, burn or punctuate the insulation system. However, since the power transmission cable according to the present invention is provided with a first layer as an initial moisture barrier layer, there is very little or no risk of damaging the insulation layer. For instance the use of welding and corrugating of the metallic layer is possible without causing damage to the insulation layer, such as perforation of the insulation layer caused by the metal being used, or damage caused by welding heat, burner, torch or sparks. Also, it will be possible to extrude other metals than lead. Other metals, such as copper, usually heat the cable to higher temperatures than lead during extrusion which could potentially harm the cable in the process. However, the first plastic layer of the moisture barrier arrangement will provide protection to the insulation system during extrusion in higher temperatures and also during application of the second layer of the moisture barrier arrangement by means of welding, gluing or by means of mechanical attachment means.

In the step iv) the second layer of the moisture barrier arrangement may be corrugated metal, such as copper, an alloy comprising copper, aluminium, an alloy comprising aluminium, lead or steel.

In the step iv) the second layer of the moisture barrier arrangement may also be a smooth metal material, i.e. the material layer may be non-corrugated. The metallic layer may be welded metal material, wherein for example a metal foil is wrapped around the cable and the joints are welded, so as to form a tube around the cable which is water-impermeable.

In the process according to the above, the steps iii) and iv) are performed separately and independently of each other. This means that the choice of the second layer as the primary moisture barrier may be made at a later stage. The choice of material and method of applying said material may be chosen based on the destined use for the power transmission cable. The power transmission cable will have an initial moisture barrier layer with the first layer and will not be damaged by moisture or water during the time lapsed from the process step iii) up to when step iv) is executed. Hence this will allow for a more flexible moisture barrier arrangement that may be adapted for different needs.

The process according to the above is performed on power transmission cables wherein the insulation system comprises a paper-based insulation layer and at least one paper-based semi-conducting layer. In such a case step ii) is commonly used.

## Claims

1. Power transmission cable (10; 20; 30) comprising a metal conductor (1; 21; 31), an electric insulation system (2; 22; 32) surrounding the conductor coaxially and radially outwards of the conductor, and a protection system surrounding the insulation system coaxially and radially outwards of the insulation system, wherein the insulation system (2; 22; 32) comprises an inner semi-conducting layer (4; 24; 34) surrounded coaxially and radially outwards by an insulation layer (5; 25; 35), and the insulation layer is optionally surrounded coaxially and radially outwards by an outer semi-conducting layer (26, 36), wherein the protection system comprises a moisture barrier arrangement (3; 23; 33) surrounding the insulation system coaxially and radially outwards of the insulation system, wherein the inner semi-conducting layer (4), the insulation layer (5) and the optional outer semi-conducting layer of the insulation system (2) are paper-based **characterized in that** the moisture barrier arrangement (3; 23; 33) comprises an independently applicable first layer (7; 27; 37), acting as an initial moisture barrier layer, and an independently applicable second layer (8; 28; 38), acting as a permanent moisture barrier the first layer (7; 27; 37) being an extruded plastic material layer and arranged in direct contact with the insulation system (2; 22; 32), and the second layer (8; 28; 38) being a metallic material layer and arranged in contact with the first layer (7; 27; 37), wherein the extrudable plastic material in the first layer (7; 27; 37) of the moisture barrier arrangement (3; 23; 33) is semi-conducting and a lipophobic polymer, wherein the paper-based insulation system (2) is impregnated with a dielectric fluid.

2. Power transmission cable according to claim 1, wherein the second layer (8; 28; 38) of the moisture barrier arrangement (3; 23; 33) is an extruded or welded metallic layer which is corrugated or non-corrugated.

3. Power transmission cable according to any of the preceding claims, wherein the second layer (8; 28; 38) of the moisture barrier arrangement (3; 23; 33) comprises a metallic layer of copper, an alloy comprising copper, aluminium, an alloy comprising aluminium, lead or steel.

4. Power transmission cable according to any of the preceding claims, wherein the second layer (8; 28; 38) of the moisture barrier arrangement is an extruded lead sheath.

5. Power transmission cable according to any of the preceding claims, wherein the cable is a high voltage direct current, DC, cable.

6. Power transmission cable according to any of claims 1 - 4, wherein the cable is a high voltage alternating current, AC, cable.

7. A process for the production of a power transmission cable according to any of the claims 1-6, comprising the steps of:
i) providing a conductor (1; 21; 31) for a power transmission cable (10; 20; 30) and applying an insulation system (2; 22; 32) to surround the conductor (1; 21; 31) coaxially and radially outwards of the conductor (1; 21; 31), wherein the insulation system (2; 22; 32) comprises an inner semi-conducting layer (4; 24; 34) surrounded coaxially and radially outwards by an insulation layer (5; 25; 35), wherein the inner semi-conducting layer (4) and the insulation layer (5) of the insulation system (2) is a paper-based ;
ii) impregnating the cable from the step i), comprising the conductor (1; 21; 31) and the insulation system (2; 22; 32), with a dielectric fluid;
iii) applying a first layer of a moisture barrier arrangement (3; 23; 33) by extruding a layer of plastic material (7; 27; 37) onto and in direct contact with the insulation system (2; 22; 32), which first layer (7; 27; 37) acts as an initial moisture barrier layer and wherein the extrudable plastic material in the first layer (7; 27; 37) of the moisture barrier arrangement (3; 23; 33) is semi-conducting and a lipophobic polymer, wherein the moisture barrier arrangement forms part of a protection system surrounding the insulation system coaxially and radially outwards of the insulation system;
iv) applying a metallic layer (8; 28; 38) as a second layer of the moisture barrier arrangement (3; 23; 33) onto and in contact with the first layer (7; 27; 37) of the moisture barrier arrangement (3; 23; 33), which second layer acts as a permanent moisture barrier, wherein the steps iii) and iv) are performed separately and independently of each other.

8. Process according to claim 7, wherein in the step iii) the extruded plastic material (7; 27; 28) is applied onto the insulation system (2; 22; 32) of the cable provided from the step i) or ii) as a plastic tube with a diameter which exceeds the diameter of the cable by extrusion of the plastic material with a speed that is slower than the feeding speed of the cable, such that when the cable is provided with the extruded plastic tube, the tube is elongated by the higher speed of the cable, causing the diameter of the plastic tube to decrease such that is will fit closely to and in direct contact with the insulation system (2; 22; 32) of the cable (10; 20; 30).

9. Process according to claim 7 or 8, wherein in the step iv) the second layer (8; 28; 38) of the moisture barrier arrangement (3; 23; 33) is applied by means of extruding, welding, gluing or by means of mechanical attachment means to the first layer (7; 27; 37) of the moisture barrier arrangement (3; 23; 33).

10. Process according to any one of claims 7 to 9, wherein in the step iv) the second layer (8; 28; 38) of the moisture barrier arrangement (3; 23; 33) is corrugated.

## Patentansprüche

1. Stromübertragungskabel (10; 20; 30), umfassend einen metallischen Leiter (1; 21; 31), ein den Leiter koaxial und radial außerhalb des Leiters umgebendes elektrisches Isolationssystem (2; 22; 32) und ein das Isolationssystem koaxial und radial außerhalb des Isolationssystems umgebendes Schutzsystem, wobei das Isolationssystem (2; 22; 32) eine innere halbleitende Schicht (4; 24; 34) umfasst, die koaxial und radial außerhalb von einer Isolationsschicht (5; 25; 35) umgeben ist, und die Isolationsschicht optional koaxial und radial nach außen von einer äußeren halbleitenden Schicht (26, 36) umgeben ist, wobei das Schutzsystem eine Feuchtigkeitssperranordnung (3; 23; 33) umfasst, die das Isolationssystem koaxial und radial nach außen umgibt, wobei die innere halbleitende Schicht (4), die Isolationsschicht (5) und die optionale äußere halbleitende Schicht des Isolationssystems (2) papierbasiert sind, **dadurch gekennzeichnet, dass** die Feuchtigkeitssperranordnung (3; 23; 33) eine unabhängig applizierbare erste Schicht (7; 27; 37) umfasst, die als anfängliche Feuchtigkeitssperrschicht wirkt, und eine unabhängig applizierbare zweite Schicht (8; 28; 38), die als permanente Feuchtigkeitssperre wirkt, wobei die erste Schicht (7; 27; 37) eine Schicht aus extrudiertem Kunststoffmaterial ist und in direktem Kontakt mit dem Isolationssystem (2; 22; 32) angeordnet ist und die zweite Schicht (8; 28; 38) eine metallische Materialschicht ist und in Kontakt mit der ersten Schicht (7; 27; 37) angeordnet ist, wobei das extrudierbare Kunststoffmaterial in der ersten Schicht (7; 27; 37) der Feuchtigkeitssperranordnung (3; 23; 33) halbleitend und ein lipophobes Polymer ist, wobei das papierbasierte Isolationssystem (2) mit einem dielektrischen Fluid imprägniert ist.

2. Stromübertragungskabel nach Anspruch 1, wobei die zweite Schicht (8; 28; 38) der Feuchtigkeitssperranordnung (3; 23; 33) eine extrudierte oder geschweißte metallische Schicht ist, die gewellt oder nicht gewellt ist.

3. Stromübertragungskabel nach einem der vorhergehenden Ansprüche, wobei die zweite Schicht (8; 28; 38) der Feuchtigkeitssperranordnung (3; 23; 33) eine metallische Schicht aus Kupfer, eine Legierung aus Kupfer, Aluminium, eine Legierung aus Aluminium, Blei oder Stahl umfasst.

4. Stromübertragungskabel nach einem der vorhergehenden Ansprüche, wobei die zweite Schicht (8; 28; 38) der Feuchtigkeitssperranordnung ein extrudierter Bleimantel ist.

5. Stromübertragungskabel nach einem der vorhergehenden Ansprüche, wobei das Kabel ein Hochspannungs-Gleichstrom-, GS, Kabel ist.

6. Stromübertragungskabel nach einem der Ansprüche 1 bis 4, wobei das Kabel ein Hochspannungs-Wechselstrom-, WS, Kabel ist.

7. Verfahren zur Herstellung eines Stromübertragungskabels nach einem der Ansprüche 1-6, umfassend die Schritte:
i) Bereitstellen eines Leiters (1; 21; 31) für ein Stromübertragungskabel (10; 20; 30) und Aufbringen eines Isolationssystems (2; 22; 32), um den Leiter (1; 21; 31) koaxial und radial außerhalb des Leiters (1; 21; 31) zu umgeben, wobei das Isolationssystem (2; 22; 32) eine innere halbleitende Schicht (4; 24; 34) umfasst, die koaxial und radial nach außen von einer Isolationsschicht (5; 25; 35) umgeben ist, wobei die innere halbleitende Schicht (4) und die Isolationsschicht (5) des Isolationssystems (2) eine papierbasierte Schicht ist;
ii) Imprägnieren des Kabels aus dem Schritt i), umfassend den Leiter (1; 21; 31) und das Isolationssystem (2; 22; 32), mit einem dielektrischen Fluid;
iii) Aufbringen einer ersten Schicht einer Feuchtigkeitssperranordnung (3; 23; 33) durch Extrudieren einer Schicht aus Kunststoffmaterial (7; 27; 37) auf und in direktem Kontakt mit dem Isolationssystem (2; 22; 32), wobei die erste Schicht (7; 27; 37) als eine anfängliche Feuchtigkeitssperrschicht wirkt und wobei das extrudierbare Kunststoffmaterial in der ersten Schicht (7; 27; 37) der Feuchtigkeitssperranordnung (3; 23; 33) halbleitend und ein lipophobes Polymer ist, wobei die Feuchtigkeitssperranordnung einen Teil eines Schutzsystems bildet, das das Isolationssystem koaxial und radial nach außen des Isolationssystems umgibt;
iv) Aufbringen einer metallischen Schicht (8; 28; 38) als eine zweite Schicht der Feuchtigkeitssperranordnung (3; 23; 33) auf und in Kontakt mit der ersten Schicht (7; 27; 37) der Feuchtigkeitssperranordnung (3; 23; 33), wobei die zweite Schicht als eine permanente Feuchtigkeitssperre wirkt, wobei die Schritte iii) und iv) separat und unabhängig voneinander durchgeführt werden.

8. Verfahren nach Anspruch 7, wobei im Schritt iii) das extrudierte Kunststoffmaterial (7; 27; 28) auf das Isolationssystem (2; 22; 32) des aus Schritt i) oder ii) bereitgestellten Kabels als Kunststoffschlauch mit einem Durchmesser aufgebracht wird, der den Durchmesser des Kabels übersteigt, indem das Kunststoffmaterial mit einer Geschwindigkeit extrudiert wird, die langsamer ist als die Vorschubgeschwindigkeit des Kabels, so dass, wenn das Kabel mit dem extrudierten Kunststoffschlauch bereitgestellt wird, der Schlauch durch die höhere Geschwindigkeit des Kabels gedehnt wird, was bewirkt, dass der Durchmesser des Kunststoffschlauchs abnimmt, so dass er eng an und in direktem Kontakt mit dem Isolationssystem (2; 22; 32) des Kabels (10; 20; 30) liegt.

9. Verfahren nach Anspruch 7 oder 8, wobei im Schritt iv) die zweite Schicht (8; 28; 38) der Feuchtigkeitssperranordnung (3; 23; 33) mittels Extrudieren, Schweißen, Kleben oder mittels mechanischer Befestigungsmittel auf die erste Schicht (7; 27; 37) der Feuchtigkeitssperranordnung (3; 23; 33) aufgebracht wird.

10. Verfahren nach einem der Ansprüche 7 bis 9, wobei im Schritt iv) die zweite Schicht (8; 28; 38) der Feuchtigkeitssperranordnung (3; 23; 33) gewellt ist.

## Revendications

1. Câble de transmission d'énergie (10 ; 20 ; 30) comprenant un conducteur métallique (1 ; 21 ; 31), un système d'isolation électrique (2 ; 22 ; 32) entourant le conducteur coaxialement et radialement vers l'extérieur du conducteur, et un système de protection entourant le système d'isolation coaxialement et radialement vers l'extérieur du système d'isolation, dans lequel le système d'isolation (2 ; 22 ; 32) comprend une couche semiconductrice intérieure (4 ; 24 ; 34) entourée coaxialement et radialement vers l'extérieur par une couche d'isolation (5 ; 25 ; 35), et la couche d'isolation est facultativement entourée coaxialement et radialement vers l'extérieur par une couche semiconductrice extérieure (26, 36), dans lequel le système de protection comprend un agencement barrière contre l'humidité (3 ; 23 ; 33) entourant le système d'isolation coaxialement et radialement vers l'extérieur du système d'isolation, dans lequel la couche semiconductrice intérieure (4), la couche d'isolation (5) et la couche semiconductrice extérieure facultative du système d'isolation (2) sont à base de papier, **caractérisé en ce que** l'agencement barrière contre l'humidité (3 ; 23 ; 33) comprend une première couche applicable indépendamment (7 ; 27 ; 37), agissant en tant qu'une couche barrière contre l'humidité initiale et une deuxième couche applicable indépendamment (8 ; 28 ; 38), agissant en tant qu'une barrière contre l'humidité permanente, la première couche (7 ; 27 ; 37) étant une couche de matière plastique extrudée et agencée en contact direct avec le système d'isolation (2 ; 22 ; 32), et la deuxième couche (8 ; 28 ; 38) étant une couche de matière métallique et agencée en contact avec la première couche (7 ; 27 ; 37), dans lequel la matière plastique extrudée dans la première couche (7 ; 27 ; 37) de l'agencement barrière contre l'humidité (3 ; 23 ; 33) est semiconductrice et un polymère lipophobe, dans lequel le système d'isolation à base de papier (2) est imprégné d'un fluide diélectrique.

2. Câble de transmission d'énergie selon la revendication 1, dans lequel la deuxième couche (8 ; 28 ; 38) de l'agencement barrière contre l'humidité (3 ; 23 ; 33) est une couche métallique extrudée ou soudée qui est ondulée ou non ondulée.

3. Câble de transmission d'énergie selon l'une quelconque des revendications précédentes, dans lequel la deuxième couche (8 ; 28 ; 38) de l'agencement barrière contre l'humidité (3 ; 23 ; 33) comprend une couche métallique de cuivre, alliage comprenant du cuivre, aluminium, alliage comprenant de l'aluminium, plomb ou acier.

4. Câble de transmission d'énergie selon l'une quelconque des revendications précédentes, dans lequel la deuxième couche (8 ; 28 ; 38) de l'agencement barrière contre l'humidité est une gaine de plomb extrudée.

5. Câble de transmission d'énergie selon l'une quelconque des revendications précédentes, dans lequel le câble est un câble de courant continu, CC, à haute tension.

6. Câble de transmission d'énergie selon l'une quelconque des revendications 1 à 4, dans lequel le câble est un câble de courant alternatif, CA, à haute tension.

7. Procédé de production d'un câble de transmission d'énergie selon l'une quelconque des revendications 1 à 6, comprenant les étapes de :
i) la fourniture d'un conducteur (1 ; 21 ; 31) pour un câble de transmission d'énergie (10 ; 20 ; 30) et l'application d'un système d'isolation (2 ; 22 ; 32) pour entourer le conducteur (1 ; 21 ; 31) coaxialement et radialement vers l'extérieur du conducteur (1 ; 21 ; 31), dans lequel le système d'isolation (2 ; 22 ; 32) comprend une couche semiconductrice intérieure (4 ; 24 ; 34) entourée coaxialement et radialement vers l'extérieur par une couche d'isolation (5 ; 25 ; 35), dans lequel la couche semiconductrice intérieure (4) et la couche d'isolation (5) du système d'isolation (2) sont à base de papier ;
ii) l'imprégnation du câble de l'étape i), comprenant le conducteur (1 ; 21 ; 31) et le système d'isolation (2 ; 22 ; 32), avec un fluide diélectrique ;
iii) l'application d'une première couche d'un agencement barrière contre l'humidité (3 ; 23 ; 33) par l'extrusion d'une couche de matière plastique (7 ; 27 ; 37) sur et en contact direct avec le système d'isolation (2 ; 22 ; 32), la première couche (7 ; 27 ; 37) agit en tant d'une couche barrière contre l'humidité initiale et dans lequel la matière plastique extrudable dans la première couche (7 ; 27 ; 37) de l'agencement barrière contre l'humidité (3 ; 23 ; 33) est semiconductrice et un polymère lipophobe, dans lequel l'agencement barrière contre l'humidité fait partie d'un système de protection entourant le système d'isolation coaxialement et radialement vers l'extérieur du système d'isolation ;
iv) l'application d'une couche métallique (8 ; 28 ; 38) en tant qu'une deuxième couche de l'agencement barrière contre l'humidité (3 ; 23 ; 33) sur et en contact direct avec la première couche (7 ; 27 ; 37) de l'agencement barrière contre l'humidité (3 ; 23 ; 33), la deuxième couche agit en tant qu'une barrière contre l'humidité permanente, dans lequel les étapes iii) et iv) sont réalisées séparément et indépendamment l'une de l'autre.

8. Procédé selon la revendication 7, dans lequel, à l'étape iii), la matière plastique extrudée (7 ; 27 ; 28) est appliquée sur le système d'isolation (2 ; 22 ; 32) du câble fourni à l'étape i) ou ii) en tant qu'un tube en plastique d'un diamètre supérieur au diamètre du câble par extrusion de la matière plastique à une vitesse inférieure à la vitesse d'amenée du câble, de sorte que, lorsque le câble est pourvu du tube en plastique extrudé, le tube soit allongé par la vitesse supérieure du câble, en amenant le diamètre du tube en plastique à diminuer de manière à ce qu'il s'ajuste étroitement et en contact direct avec le système d'isolation (2 ; 22 ; 32) du câble (10 ; 20 ; 30).

9. Procédé selon la revendication 7 ou 8, dans lequel, à l'étape iv), la deuxième couche (8 ; 28 ; 38) de l'agencement barrière contre l'humidité (3 ; 23 ; 33) est appliquée par extrusion, soudage, collage ou un moyen de fixation mécanique à la première couche (7 ; 27 ; 37) de l'agencement barrière contre l'humidité (3 ; 23 ; 33).

10. Procédé selon l'une quelconque des revendications 7 à 9, dans lequel, à l'étape iv), la deuxième couche (8 ; 28 ; 38) de l'agencement barrière contre l'humidité (3 ; 23 ; 33) est ondulée.
